Europäisches Patentamt

European Patent Office

Office européen des brevets

(11) Publication number: **0 203 222**
**A1**

# EUROPEAN PATENT APPLICATION

(21) Application number: **85114132.5**

(22) Date of filing: **06.11.85**

(51) Int. Cl.⁴: **H 02 K 33/18**

(30) Priority: **22.05.85 US 736837**

(43) Date of publication of application: **03.12.86**
**Bulletin 86/49**

(84) Designated Contracting States: **DE FR GB IT SE**

(71) Applicant: **Hultman, Barry W., 327 Brewster Road, Bristol Connecticut 06010 (US)**

(72) Inventor: **Hultman, Barry W., 327 Brewster Road, Bristol Connecticut 06010 (US)**

(74) Representative: **Lichti, Heiner, Dipl.-Ing. et al, Patentanwälte Dr. Ing. Hans Lichti Dipl.-Ing. Heiner Lichti Dipl.-Phys. Dr.rer.nat. Jost Lempert Durlacher Strasse 31 Postfach 410760, D-7500 Karlsruhe 41 (DE)**

(54) **Electromagnetic linear motor and pump apparatus.**

(57) A long stroke, large force electromagnetic linear motor and pump apparatus having concentric inner and outer magnetic circuits arranged coaxially and moving relative to one another in a rectilinear path with reciprocating motion in response to the interaction of magnetic fields produced by the inner (12) and outer (48) magnetic circuits, respectively. The invention further resides in a central core pump having a pumping tube (72) connected for movement with the outer magnetic circuit (48) and in coaxially alignment with inlet (96) and discharge (84) tubes and each of the three tubes having a check valve (98, 102, 104) to form variable volume chambers between the pumping and inlet and pumping and outlet tubes respectively so that successive volumes of fluid are drawn into one and discharged from the other when the outer circuit moves in one direction and discharged from one and drawn into the other when the outer circuit moves in the opposite direction.

ELECTROMAGNETIC LINEAR MOTOR AND PUMP APPARATUS

BACKGROUND OF THE INVENTION

This invention relates generally to electromagnetic linear motors and deals more specifically with a long stroke, electromagnetic linear motor and fluid pump apparatus.

It is known in the prior art to provide an electromagnetic linear motion motor based on the principle of generating a linear force by the interaction of two magnetic fields to cause relative movement between magnetic members. Generally, one of the magnetic fields is produced by one magnetic member such as, a permanent magnet which is generally held stationary relative to another magnetic member such as, an electric coil assembly in which a unidirectional (DC) current flows to produce the other magnetic field and which assembly is moveable relative to the permanent magnet. The force produced by such an electromagnetic motor is directly proportional to the product of the magnetic flux density produced by the permanent magnet and the magnitude of the current carried by the moving electric coil. Since the magnetic flux density is produced by a unidirectional current, it is of a substantially constant value and the direction of movement and accordingly, force is determined by the directional sense or polarity of the DC current flowing in the electric coil.

One drawback generally associated with an electromagnetic linear motor of the aforedescribed type is that the magnetic flux density produced by a permanent magnet is generally not of sufficient magnitude to cause an appreciable force and movement of any substantial displacement by the coil assembly relative to the stationary permanent magnet unless the magnet is very large thus substantially increasing the size of the motor. Consequently, such linear motors are, in practice, limited to applications wherein a relatively short stroke and small force are required.

Another drawback often associated with the above described type of electromagnetic motor is that the moving coil assembly generally operates with a large force in one direction of movement only and usually requires a biasing means, such as a spring, to return the moving assembly to its initial starting position from its operated position.

A linear motor has an advantage that in some circumstances it may be integrated into the design of the apparatus it is driving to save space.

Another advantage of a linear motor in comparison to a rotational motor, for example, one used to drive a reciprocating device, is the elimination of additional mechanisms and apparatus such as, for example, a crankshaft and connecting rod, to trans-form rotational motion to linear motion.

It would be desirable, therefore, to provide an electromagnetic linear motor that produces a substantially large force with a long stroke that overcomes many of the drawbacks associated with prior electromagnetic linear motion motors.

It is therefore a general aim of the present invention to provide a large force, long stroke electromagnetic linear motion motor to drive a reciprocating device.

It is a further aim of the present invention to provide a long stroke electromagnetic linear motion motor that produces a sufficiently large force to drive an associated central core fluid pump device.

Other objects and advantages of the invention will be apparent from the following detailed description and from the accompanying drawings forming a part thereof.

## SUMMARY OF THE INVENTION

In accordance with the present invention, an electromagnetic linear motion motor and an associated central core fluid pump is presented. A magnetic structure has concentric inner and outer magnetic circuits which move relative to one another in a rectilinear path with a reciprocating motion. The inner magnetic circuit includes an elongated cylindrical core which has a diametrically enlarged portion at one end and is supported at its other end by a bottom plate. An outer, concentric shell forms an air gap with the enlarged portion and the shell is supported at one end by the bottom plate. A conductor is wound on the core to form a first electric coil to produce a first magnetic field across the air gap in response to a first-applied electric signal. The outer magnetic circuit includes a shuttle assembly which is coaxially arranged between the core and shell for rectilinear motion through the air gap. A conductor is wound on the shuttle to form a second electric coil to produce a second magnetic field in response to a second-applied electric signal. The shuttle moves with a reciprocating motion through the air gap in response to the interaction of the first and second magnetic fields.

The invention further resides in the cylindrical core having an axial bore forming a first tube which is in registry with a central opening in the bottom plate. The shuttle has a support plate at one end which has an axial central opening. A second tube is fixedly mounted in the central opening of the plate for movement with the plate and extends some distance on opposite sides of the plate. A third tube is fixedly connected to the inner magnetic circuit concentric shell in coaxial alignment with the first and second tubes so that the second tube moves coaxially within the first and third tubes. Sealing means of some type located near the respective ends of the second tube form a seal between the second tube and the first and third tubes, respectively. Each of the tubes has a check valve to form a first variable volume

0203222

chamber in the first and second tubes and a second variable volume chamber in the second and third tubes so that successive volumes of fluid are drawn into the first chamber and discharged from the second chamber when the shuttle moves in one direction and to draw fluid from the first chamber into the second chamber when the shuttle moves in the other direction, respectively whereby continuous reciprocating motion of the shuttle causes successive volumes of fluid to be drawn into and expelled from the pump.

## DESCRIPTION OF THE DRAWINGS

Fig. 1 is a sectional view of an electromagnetic linear motor embodying the present invention arranged with a central core fluid pump apparatus.

Fig. 2 is a sectional view of the primary magnetic field coil, central core and inlet tube assembly of the linear motor and fluid pump apparatus of Fig. 1 shown without the inlet tube one-way directional flow valve.

Fig. 3 is a sectional view of the secondary magnetic field coil bobbin and pumping tube assembly of the linear motor and fluid pump apparatus of Fig. 1 shown without the pumping tube one-way directional flow valve.

Fig. 4 is a sectional view of the outer plate and discharge tube assembly of the linear motor and fluid pump apparatus of Fig. 1 shown without the upper discharge one-way directional flow valve.

Fig. 5 is a sectional view of another embodiment of the electromagnetic linear motor of the present invention arranged to drive a reciprocating pump.

### DETAILED DESCRIPTION OF THE PREFERRED EMBODIMENTS

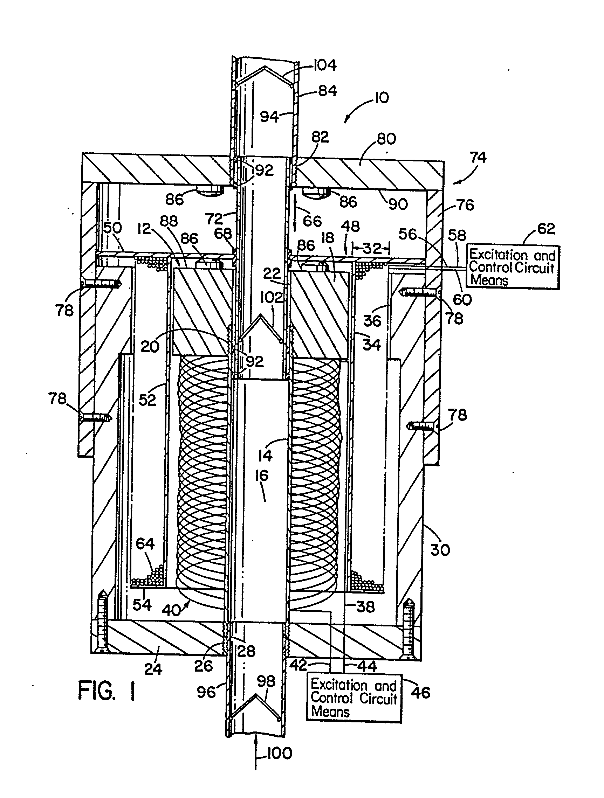

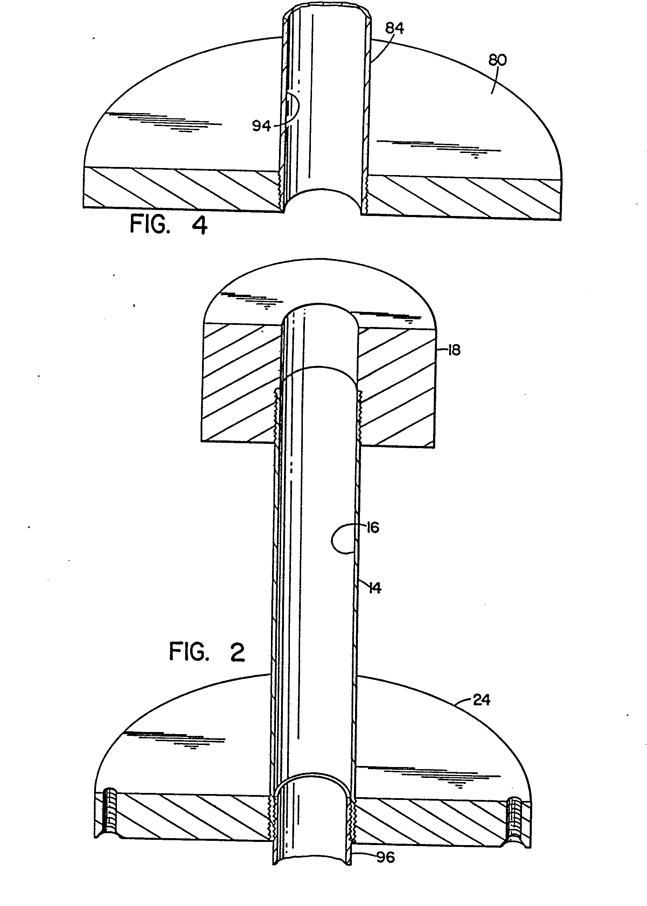

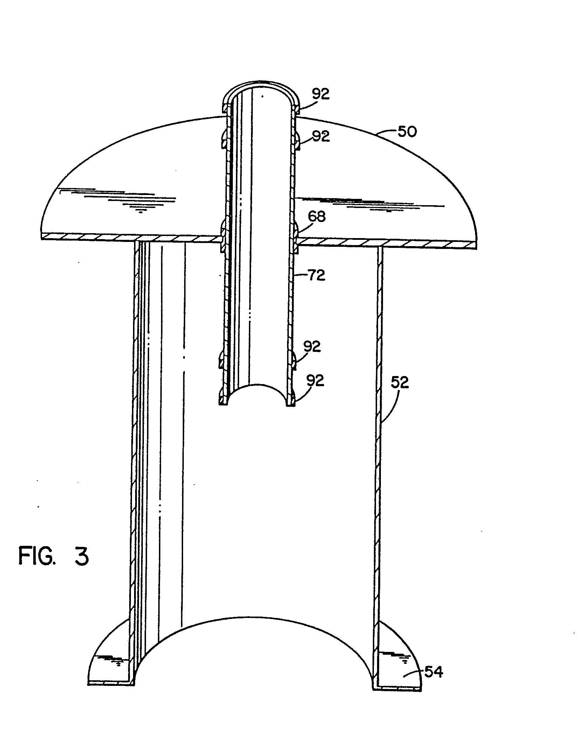

Considering now the invention in further detail and referring to Figs. 1 through 4, an electromagnetic linear motor generally designated 10 embodying the present invention is shown therein, and is arranged with a central core fluid pump. The electromagnetic motor 10, in the illustrated embodiment, is generally cylindrical in configuration; however, other configurations such as polygonal, or rectangular may be used.

The electromagnetic motor 10 includes an inner magnetic circuit comprised of a primary magnetic field coil central core assembly designated generally 12, made of a magnetic material, such as, for example, cold rolled steel, and an outer concentric shell 30. The assembly 12 includes an axially elongated core 14 having an axial bore designated generally 16. One end of the central core assembly 12 includes a generally cylindrical, diametrically enlarged portion 18 which has a threaded central opening 20 to receive one end of the core 14. The opening 20 has an inner diameter and wall length so as to form a continuous, smooth transition along the inner wall 22 of the upper portion of the assembly 12 when the core 14 is inserted therein. The assembly 12 also includes a bottom plate 24 which has a threaded central opening 26 to receive and support the threaded lower portion 28 of the core 14. The concentric outer shell 30 is connected to and supported by the plate 24 at the lower end of the wall. The concentric outer shell 30 surrounds the core 14 and forms an annular air gap 32 between the outer surface 34 of the enlarged portion 18 and the inner surface 36 of the upper part of the outer shell 30.

The core 14 has a conductor 38 wound around it to form an electromagnetic coil 40 which produces a magnetic field across the air gap 32 in response to an electric signal potential applied across the conductor 38 ends 42,44, respectively. The ends 42, 44 are connected to a primary excitation and control circuit means indicated generally by the function block 46. The electromagnetic primary coil 40, when excited by an electric signal from the primary excitation and control circuit 46, produces across the air gap 32 a magnetic field having a substantially greater magnetic flux density than a corresponding magnetic field produced by a permanent magnet core.

A secondary magnetic field coil bobbin assembly generally designated by the numeral 48 includes an upper support plate 50, a bobbin wall 52 and a lower support plate 54, the plate 50, wall 52 and lower support plate 54 collectively forming a spool around which a conductor 56 is wound to form a secondary electromagnetic coil 64. The axial length of the secondary coil 64 is longer than the axial length of the diametrically enlarged portion 18 and preferably, is at least twice as long. The electromagnetic coil 64 produces a second magnetic field in response to an electric signal potential applied across the ends 58,60, respectively of conductor 56. The ends 58,60 are connected to a secondary excitation and control circuit means designated generally by the function block 62. The electromagnetic secondary coil 64, when excited by an electric signal from the secondary excitation and control circuit 62, produces a second magnetic field which interacts in the air gap 32 with the first magnetic field to cause the bobbin assembly 48 to shuttle back and forth with a reciprocating motion in the direction shown by arrow 66.

The electromagnetic motor operates as follows. An electric DC current of the proper magnitude and electrical polarity is supplied to the primary coil 40 by the primary excitation and control circuit 46. The primary coil 40 produces a magnetic field across the air gap 32 in response to the applied electric signal. A second electric signal potential of the proper magnitude and electrical polarity is supplied to the secondary coil 64 by the secondary excitation and control circuit 62. The secondary coil 64 produces in response to the applied electric signal a second magnetic field that interacts with the first magnetic field to propel the bobbin assembly 48 and the secondary coil 64 wound around it in the direction of arrow 66 due to the DC current flowing in the secondary coil cutting the lines of flux produced in the air gap 32 by the excitation of the primary coil 40. The bobbin assembly 48 will continue to move until it is completely out of the air gap 32 unless mechanically stopped or until the second electric signal potential applied to the secondary coil 64 is removed or reversed in polarity. It is preferable to reverse polarity rather than remove the second electric signal to cause the bobbin assembly to move in a direction opposite to its first travel direction in order to better control and regulate the bobbin assembly reciprocating frequency. It will be seen that successive polarity reversals of the second electric signal causes the bobbin assembly 48 to shuttle back and forth.

The bobbin assembly 48 upper support plate 50 is arranged with a central opening 68 in registry with the axial bore 16 in core 14 and a snap or retaining ring 70 mounted in the opening 68 axially holds a pumping tube 72 which extends therethrough for a predetermined distance above and below the plate 50. The portion of the pumping tube 72 extending below the plate 50 extends into the axial bore 16 of the core 14 and has sufficient length so that a portion of the tube 72 remains in the bore 16 when the bobbin assembly 48 travels to its maximum displacement in a direction away from the enlarged portion 18.

A cylindrical upper section designated generally at 74 has a wall 76 which is held in engagement with the shell 30 by some type of fastener 78,78. The upper section 74 includes an outer plate 80 attached to the wall 76 and is arranged with a threaded central opening 82 substantially in registry with the opening 68 through which the pumping tube 72 passes. An upper tube 84 has one end threaded and is screwed into the opening 82.

The portion of the pumping tube 72 above the support plate 50 extends a sufficient length into the upper tube 84 so that a portion of the tube 72 remains in the tube 84 when the bobbin assembly 48 is at a maximum displacement in a direction away from the upper plate 80.

Shock absorbing bumpers 86,86 are positioned on the upper surface 88 of the enlarged portion 18 and on the lower surface 90 of the outer plate 80 and serve as mechanical stops and energy absorbers for the bobbin assembly 48 in those instances where its travel range is exceeded prior to reversing direction as it shuttles back and forth in the travel area between the lower surface 90 and the upper surface 88.

Gaskets or seals 92,92 located near the upper and lower portions of the pumping tube 72 form a seal between the inner wall 94 of the outer tube 84 and the pumping tube 72 upper portion and the inner wall 22 of the enlarged portion 18 and the core 14 and the lower portion of the pumping tube 72, respectively.

A number of check or one-way directional flow valves are shown in Fig. 1 and are used to create separate fluid chambers within the central core fluid pump of the linear motor 10. A lower tube 96 is shown in Fig. 1 screwed into an inner threaded portion of the core 14 and includes a one-way directional flow valve 98 which is arranged for fluid flow in the direction of arrow 100. Another one-way directional pumping valve 102, arranged for fluid flow in the direction of arrow 100 is connected inside and moves with the pumping tube 72. A third one-way directional flow valve 104 is located in the upper tube 84 and is also aranged for fluid flow in the direction of arrow 100.

The central core fluid pump operates as follows. When the bobbin assembly 48 and pumping tube 72 attached thereto are caused to move in a direction toward the upper plate 80 in response to the interaction of the magnetic fields in the air gap 32, suction is created in the chamber in the bore 16 between the pumping valve 102 and the lower one-way valve 98 and a volume of fluid is drawn into and trapped in the chamber between valves 98 and 102. At the end of its stroke, the direction of travel of the bobbin assembly 48 is reversed in response to the interaction of the magnetic fields in the air gap 32 and the bobbin assembly 48 moves toward the enlarged portion 18. As the bobbin assembly 48 moves toward the enlarged portion 18, the one-way valve 98 inhibits fluid flow through itself and as the chamber volume between valves 98 and 102 decreases, the trapped fluid is forced through one-way valve 102 and into the chamber formed between valves 102 and 104 of the pumping tube 72 and the upper tube 84, respectively. The bobbin assembly 48 travel direction is again reversed at the end of its stroke in response to the interaction of the magnetic fields in the air gap 32. As the bobbin assembly 48 moves toward the plate 80, the chamber between values 102 and 104 decreases in volume and the fluid trapped in the chamber is expelled through the valve 104 and an additional segment of fluid is drawn into the chamber between the pumping valve 102 and the lower valve 98. The continuous reciprocating movement of the bobbin assembly 48 and the action of the one-way directional flow valves 98, 102, and 104, respectively causes successive volumes of water to be drawn into and expelled from the central core fluid pump.

The volume of fluid that can be drawn into and expelled by the pump is proportional to the reciprocating frequency of the bobbin assembly 48. Consequently, the volumetric output of the pump is controlled by regulating the reciprocating frequency of the electromagnetic linear motor 10.

The force F created in the air gap 32, and accordingly, the force exerted by the bobbin assembly 48 is represented by the formula:

$$F = \frac{7.07 \; (NI) \; DH}{10^6}$$

where F is in pounds, N is the number of turns in the secondary coil 64, I is the magnitude of the current flowing in the secondary coil 64 in amperes, D is the diameter of the secondary coil 64 and H is equal to the magnitude of the magnetic flux in the air gap 32 expressed in oersted/gauss. It will be seen that increasing the DC current flowing in the primary coil 40 increases the magnitude of the magnetic flux across the air gap 32. Furthermore, it will be seen that the force F generated by the bobbin assembly 48 due to the interaction of the magnetic fields produced by the secondary coil 64 and the primary coil 40 is directly related to the number of turns and the current flowing in the secondary coil 64 when the magnetic field produced by the primary coil is held constant.

It will also be seen that the air gap 32 between the primary coil 40 of the primary magnetic field coil assembly 12 and the secondary coil 64 of the secondary magnetic field coil assembly 48 remains constant for the travel range of the bobbin assembly. Consequently, the force developed by the electromagnetic linear motor 10 is continuous and substantially constant at all points along the travel path of the secondary bobbin assembly 48 as it shuttles back and forth.

It has been observed in one experimental working embodiment of the linear electromagnetic motor 10 and central core fluid pump that a sufficient force is developed at a stroke displacement of one to two inches and frequency of 1200 strokes per minute to pump water at a rate of five gallons per minute at a relatively high pressure of 300 pounds per square inch (psi). It has also been observed in another experimental working embodiment that a substantial force is produced with an associated longer stroke of approximately six inches at a frequency of 300 strokes per minute.

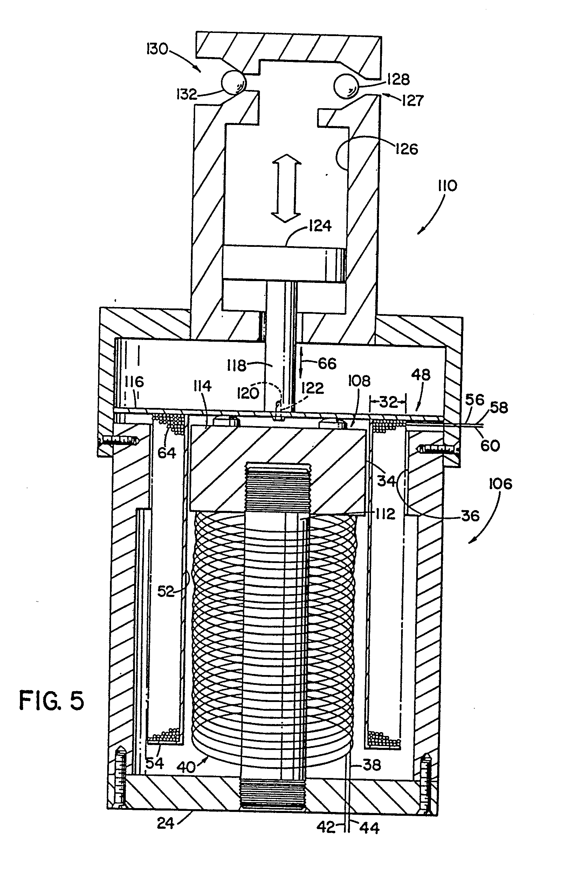

Turning now to Fig. 5, another embodiment of the invention is shown arranged to drive a reciprocating fluid pump wherein the electromagnetic linear motor is designated generally 106 and the reciprocating pump is designated generally 110. The linear motor 106 operates similarly to the linear motor 10 illustrated in Figs. 1 through 4 and disclosed hereinabove and like numbers refer to like parts. The linear motor 106 includes a primary magnetic field coil central core assembly generally designated 108 and which assembly includes an elongated central core 112 supported at one end by a bottom plate 24. The core 112 has a diametrically enlarged portion 114 at its unsupported end and a concentric outer shell 30 supported by the bottom plate 24. The shell 30 surrounds the core 112 and the enlarged portion 114 to form an annular air gap 32 between the inner surface 36 of the shell 30 and the outer surface 34 of the enlarged portion 114. The central core 112 has a conductor 38 wound around it to form a primary coil 40 which produces a magnetic field across the air gap 32 when an electric signal potential of the proper magnitude and polarity is applied across the ends 42,44 of the conductor 38, respectively.

The bobbin assembly 48 of the secondary magnetic

0203222

field coil includes a bobbin wall 52 attached at one end to an upper support plate 116 and to a lower support plate 54 at its other end. The upper support plate 116, bobbin wall 52 and lower support plate 54 form a spool around which a conductor 56 is wound to form a secondary coil 64. The coil 64 produces a secondary magnetic field in response to an electric signal applied across the ends 58, 60, respectively of the conductor 56. The magnetic field produced by the secondary coil 64 interacts in the air gap 32 with the magnetic field produced by the primary coil 40 as described hereinabove to cause the bobbin assembly 48 to shuttle back and forth in a direction indicated by the arrow 66.

The upper support plate 116 is coupled to a piston rod 118 of the pump 110 and in the illustration of Fig. 5, the piston rod 118 is shown attached to the upper support plate 116 by a threaded screw 120 passing through an opening 122 in the plate 116 to connect the piston rod 118 to the plate.

The piston rod 118 and an associated piston 124 of the pump 110 move with a reciprocating motion as the bobbin assembly 48 shuttles back and forth along its travel path. The piston 124 moving downwardly creates suction and causes fluid to be drawn into the pump chamber 126 from a fluid source or reservoir (not shown in Fig. 5) connected to an inlet designated generally 127 by unseating an inlet ball 128 from an associated inlet orifice. Fluid trapped in the chamber 126 is expelled from an outlet designated generally at 130 when the piston 124 is driven upward by the bobbin assembly 48 causing the fluid chamber to pressurize slightly, seat the inlet ball 128 in its orifice and unseat the outlet ball 132 from its orifice to expel the fluid. The piston 124, during its downward stroke again creates suction in the chamber 126 to unseat the inlet ball 128, reseat the outlet ball 132 and draw fluid into the chamber 126 through the inlet 127. It will be seen that the continuous reciprocating motion of the bobbin assembly 48 and the piston 124 of the pump 110 connected thereto causes successive volumes of fluid to be drawn into and expelled from the pump chamber 126.

An electromagnetic linear motor and fluid pump apparatus has been described in several preferred embodiments; however, numerous modifications and changes may be had without departing from the spirit of the invention. Therefore, the invention has been described by way of illustration rather than limitation.

CLAIMS

1. An electromagnetic linear motor (10) and fluid pump apparatus, said apparatus characterized by:

(a) a magnetic structure including an inner magnetic circuit (12) and an outer magnetic circuit (50,52,54,64),

(b) said inner magnetic circuit including,

i. an axially elongated cylindrical core (14) of magnetic material and having an axial bore (16) therethrough forming a first tube (14,16) and being supported at one end by a bottom plate (24) having an opening (26) therethrough in registry with said first tube (14,16), said core (14) having a diametrically enlarged end portion (18) at the end opposite the supported end, said core (14) having a conductor (38) wound thereon between said supported end and said enlarged portion to form a first electric coil means (40) for producing in response to a first-applied electric signal a first magnetic field, and

ii. an outer concentric shell (30) made of a magnetic material and supported by said bottom plate (24) for forming an air gap (32) with the enlarged end portion (18) of the core (14), said air gap completing said inner magnetic circuit to support said first magnetic field flowing in said core (14) said enlarged portion (18), said bottom plate (24), said shell (30) and across said air gap (32),

(c) said outer magnetic circuit including shuttle means (48) coaxially arranged between said core (14) and said outer concentric shell (30) and extending through said air gap (32) in an axial direction along said elongated cylindrical core, said shuttle means (48) including a bobbin (50,52,54) having a conductor (56) wound thereon to form a second electric coil means (64) for producing in response to a second-applied electric signal a second magnetic field, said shuttle means (48) being movable in a rectilinear path in one and an opposite direction through the air gap (32) respectively, in response to said second magnetic field interacting with said first magnetic field, said bobbin including a support plate (54) having a central opening therethrough substantially in registry with said first tube (14,16),

(d) a second tube (72) having an axial bore therethrough fixedly mounted in the central opening of the support plate (50) for movement with the plate (50) and shuttle means (48) and extending for some distance on opposite sides of the plate, a one end of said second tube moving coaxially within said first tube,

(e) a third tube (96), fixedly connected to the inner magnetic circuit concentric shell (30) in coaxial alignment with said first (14,16) and second (72) tubes and receiving the other of said a one end of said second tube, said second tube moving coaxially within said third tube, and

(f) sealing means (92,92) located substantially near each of said one and other end of said second tube for forming a seal between said second tube (72) outer wall and said first tube inner wall at said second tube one end and for forming a seal between said second tube outer wall and said third tube inner wall at said second tube other end, and each of said first (14,16), second (72), and third (96) tubes having check valve means (98, 102,104) for forming first a variable volume chamber in said first and second tubes and a second variable volume chamber in said second and third tubes so as to cause successive volumes of fluid to be drawn into said first chamber and discharged from said second chamber when said shuttle means (48) moves in one direction and to draw fluid from said first chamber into said second chamber when said shuttle means moves in the opposite direction whereby continuous reciprocating motion of said shuttle means causes successive volumes of fluid to be drawn into and expelled from said apparatus.

2. Apparatus as defined in claim 1 further characterized by first DC current circuit means (46) for producing said first-applied electric signal and by second DC current circuit means (62) for producing said second-applied electric signal, said second signal having a first and second polarity to cause said shuttle means (48) to move in one direction and the opposite direction, respectively.

3. Apparatus as defined in claim 1 further characterized by the axial length of said second electric coil (64) being longer than the axial length of said enlarged end portion (18) so that the magnetic field intensity produced in said air gap (32) is substantially constant as said shuttle means (48) continuously moves through said air gap whereby the force exerted by said shuttle means is substantially constant throughout said shuttle means movement.

4. Apparatus as defined in claim 3 further characterized in that the axial length of said second electric coil (64) is at least twice the axial length of said enlarged end portion (18).

5. An electromagnetic linear motor characterized by:

(a) a magnetic structure including an inner magnetic circuit (12) and an outer magnetic circuit (50,52,54,64),

(b) said inner magnetic circuit including,

i. an axially elongated cylindrical core (14) of magnetic material supported at one end by a bottom plate (24) and having a diametrically enlarged portion (18) at the end opposite the supported end, said core (14) having a conductor (38) wound around it between said supported end and said enlarged portion to form a first electric coil means (40) for producing in response to a first-applied electric signal said first magnetic field, and

ii. an outer concentric shell (30) supported by said bottom plate (24) and made of a magnetic material for forming an air gap (32) between said enlarged end portion (18) and said concentric shell (30) to support said first magnetic field thereacross,

(c) said outer magnetic circuit including shuttle means (48) coaxially arranged between said core (14) and said outer concentric shell (30) and extending through said air gap in an axial direction along said elongated cylindrical core, said shuttle means including a bobbin (50,52,54) having a conductor (56) wound thereon to form a second electric coil means (64) for producing in response to a second applied electric signal a second magnetic field, said shuttle means (48) being movable in a rectilinear path in one and an opposite direction through the air gap (32), respectively in response to said second magnetic field interacting with said first magnetic field.

6. An electromagnetic linear motor as defined in claim 5 further characterized by first DC current circuit means (46) for producing said first-applied electric signal and by second DC current circuit means (62) for producing said second-applied electric signal, said second electric signal having a first and second electrical polarity and being applied alternately in one and the other of said first and second polarities to cause said shuttle means (48) to move in one direction and the opposite direction respectively.

7. An electromagnetic linear motor as defined in claim 5 further characterized by the axial length of said second electric coil (64) being longer than the axial length of said enlarged end portion (18) so that the magnetic field intensity produced across said air gap (32) is of a substantially constant magnitude as said shuttle means (48) continuously moves in a rectilinear path through said air gap whereby the force exerted by said shuttle means is substantially constant throughout said shuttle means travel movement.

8. Apparatus as defined in claim 7 further characterized in that the axial length of said second electric coil (64) is at least twice the axial length of said enlarged end portion (18).

9. In combination with a reciprocating fluid pump (110) having inlet (127) and outlet (130) means, a

-23-

fluid chamber (126) and a pumping piston (124) in the chamber connected to a piston rod (118), an electromagnetic linear motor (106) characterized by:

(a) a magnetic structure including an inner magnetic circuit and an outer magnetic circuit,

(b) said inner magnetic circuit including,

i. an axially elongated cylindrical core (112) of magnetic material supported at one end by a bottom plate (24) and having a diametrically enlarged portion (114) at the end opposite the supported end, said core having a conductor (38) wound around it between said supported end and said enlarged portion to form a first electric coil means (40) for producing in response to a first-applied electric signal a first magnetic field, and

ii. an outer concentric shell (30) supported by said bottom plate (24) and made of a magnetic material for forming an air gap (32) between said enlarged end portion (114) and said concentric shell (30) to support said first magnetic field thereacross,

(c) said outer magnetic circuit including shuttle means (48) coaxially arranged between said core (112) and said outer concentric shell (30) and extending through said air gap (32) in an axial direction along said elongated cylindrical core, said shuttle means including a bobbin having a conductor (56) wound thereon to form a second electric coil (64) means (52,54,58,64,116) for producing in response to a second applied electric signal a second magnetic field, said shuttle means (48) having means (120) for coupling said shuttle means (48) to said piston rod (118) to drive said pump (110) with a reciprocating motion as said shuttle means (48) moves in a rectilinear path in one and an opposite direction through the air gap (32) respectively in response to said second magnetic field interacting with said first magnetic field.

FIG. 1

Excitation and Control Circuit Means

Excitation and Control Circuit Means

FIG. 4

FIG. 2

3/4

92

92

50

68

72

92

92

52

FIG. 3

54

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 131 195 (BISON) <br> * Page 19, lines 24-37; figure 8 * | 1 | H 02 K 33/18 |
| | --- | | |
| Y | DE-B-1 139 575 (DÖLZ) <br> * Column 3, line 65 - column 4, line 35; figure 1 * | 1 | |
| X | | 5,7 | |
| A | | 3 | |
| | --- | | |
| X | FR-A-2 453 998 (KERNFORSCHUNGSZENTRUM) <br> * Page 5, line 14 - page 6, line 32; figure 1 * | 5-9 | |
| | | | **TECHNICAL FIELDS SEARCHED (Int. Cl.4)** |
| A | | 1-4 | H 02 K 33/00 |
| | --- | | |
| A | PATENTS ABSTRACTS OF JAPAN, vol. 7, no. 177 (M-233)[1322], 5th August 1983; & JP - A - 58 81 282 (SHINKO DENKI K.K.) 16-05-1983 <br> * Whole abstract * | 1,3,5, 6,9 | |
| | ----- | | |

The present search report has been drawn up for all claims

| Place of search | Date of completion of the search | Examiner |
|---|---|---|
| THE HAGUE | 29-08-1986 | LE GUAY P.A. |